# EUROPEAN PATENT APPLICATION

(11) **EP 4 704 305 A1**
(43) Date of publication of application: **04.03.2026**
(21) Application number: 24796997.5
(22) Date of filing: 23.04.2024
(51) Int. Cl.: H02J 50/40, H02J 50/10, H02M 7/493

(54) **NON-CONTACT POWER SUPPLY DEVICE**

(30) Priority: 27.04.2023 JP 2023072897
(71) Applicant: DENSO CORPORATION, Kariya-city, Aichi 448-8661 (JP)
(72) Inventor: NAKAYASHIKI, Yusei, Kariya-city, Aichi 448-8661 (JP); TANI, Keisuke, Kariya-city, Aichi 448-8661 (JP); YAMAGUCHI, Nobuhisa, Kariya-city, Aichi 448-8661 (JP); TAKAHASHI, Masaya, Kariya-city, Aichi 448-8661 (JP); KANESAKI, Masaki, Kariya-city, Aichi 448-8661 (JP)
(74) Representative: TBK
(86) International application number: PCT/JP2024/015836
(87) International publication number: WO 2024/225251

(57) **Abstract**

A wireless power transfer system (10) for wireless power transfer to a power reception device (80) includes a DC power supply unit (20), at least one DC wiring (51) through which output power of the DC power supply unit is transferred, at least one DC/AC converter (30) connected to the at least one DC wiring, at least one AC wiring (52) through which output power of the at least one DC/AC converter is transferred, and at least one power transmission device (40) connected to the at least one AC wiring. A rated power of the DC power supply is greater than that of the at least one DC/AC converter.

## Description

### CROSS-REFERENCE TO RELATED APPLICATION

This present application is based on and claims the benefit of priority from Japanese Patent Application No. 2023-72897 filed on April 27, 2023, the disclosure of which is incorporated herein by reference.

### TECHNICAL FIELD

The present disclosure relates to wireless power transfer apparatuses.

### BACKGROUND

Patent Literature 1 discloses a wireless power transfer system that includes a high-frequency power source and a plurality of power transmission units connected in parallel to the high-frequency power supply through switches.

### CITATION LIST

Patent Literature 1
Japanese Patent Application Publication No. 2017-51074

### SUMMARY

As the number of power transmission units increases, the difference in the wire lengths between the power transmission unit located closer to the high-frequency power source and that located farther away from the high-frequency power source becomes greater. As the difference in wire lengths between the high-frequency power source and respective power transmission unit increases, the variation in parasitic components of the wires, such as parasitic inductances, becomes greater. This may result in a difference in power transfer efficiency occurring between a power transmission unit located closer to the high-frequency power source and another power transmission unit located farther away from the high-frequency power source.

The present disclosure can be achieved as exemplary aspect described hereinafter.

An exemplary aspect of the present disclosure provides a wireless power transfer apparatus for wireless power transfer to at least one power reception device . The wireless power transfer apparatus includes a DC power supply unit, at least one DC wiring through which output power of the DC power supply unit is transferred, at least one DC/AC converter connected to the at least one DC wiring, at least one AC wiring through which output power of the at least one DC/AC converter is transferred, and at least one power transmission device connected to the at least one AC wiring. Each of the DC power supply unit and the at least one DC/AC converter has a rated power. The rated power of the DC power supply is greater than the rated power of the at least one DC/AC converter.

Because the rated power of the DC power supply unit is greater than that of the at least one DC/AC converter, for installation of an additional DC/AC converter, the additional DC/AC converter is connected to the DC power supply unit, and the at least one power transmission device is connected to the additional DC/AC converter.

The wireless power transfer apparatus of the exemplary aspect is configured to share a wiring arrangement region between the DC power supply unit and the at least one power transmission device into (i) a first region in which the at least one DC wiring is disposed and (ii) a second region in which the at least one AC wiring is disposed. This configuration therefore enables the length of the at least one AC wiring from the at least one DC/AC converter to the at least one power transmission device to be kept shorter than in a comparative configuration in which all power transmission devices are connected to a single DC/AC converter through AC wirings. Consequently, even if the wireless power transfer apparatus includes multiple power transmission devices, the wireless power transfer apparatus makes it possible to minimize the differences in distance between the at least one DC/AC converter and each of the multiple power transmission devices, thus reducing variations in power transfer efficiency among the power transmission devices

### BRIEF DESCRIPTION OF THE DRAWINGS

Other aspects of the present disclosure will become apparent from the following description of embodiments with reference to the accompanying drawings in which:
Fig. 1 is a block diagram illustrating a schematic configuration of a wireless power transfer apparatus according to the first embodiment;
Fig. 2 is a circuit diagram illustrating the wireless power transfer apparatus according to the first embodiment;
Fig. 3 is a block diagram illustrating a schematic configuration of a wireless power transfer apparatus according to the second embodiment;
Fig. 4 is a circuit diagram illustrating a wireless power transfer apparatus according to the third embodiment;
Fig. 5 is a timing chart illustrating output waveforms of inverters according to the third embodiment;
Fig. 6 is a block diagram illustrating a schematic configuration of a wireless power transfer apparatus according to the fourth embodiment;
Fig. 7 is a block diagram illustrating a schematic configuration of a wireless power transfer apparatus according to the fifth embodiment;
Fig. 8 is a circuit diagram illustrating the wireless power transfer apparatus according to the seventh embodiment;
Fig. 9 is a circuit diagram illustrating the wireless power transfer apparatus according to the eighth embodiment; and
Fig. 10 is a circuit diagram illustrating the wireless power transfer apparatus according to the ninth embodiment.

### DETAILED DESCRIPTION OF EMBODIMENTS

### First embodiment

### Configuration of wireless power transfer system

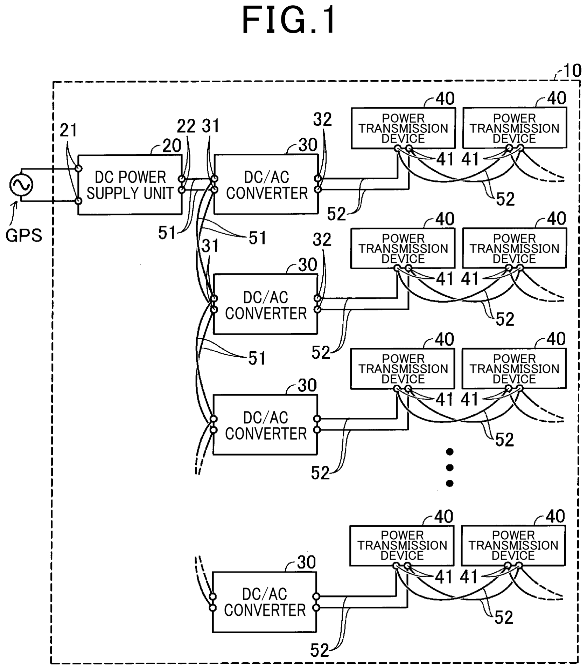

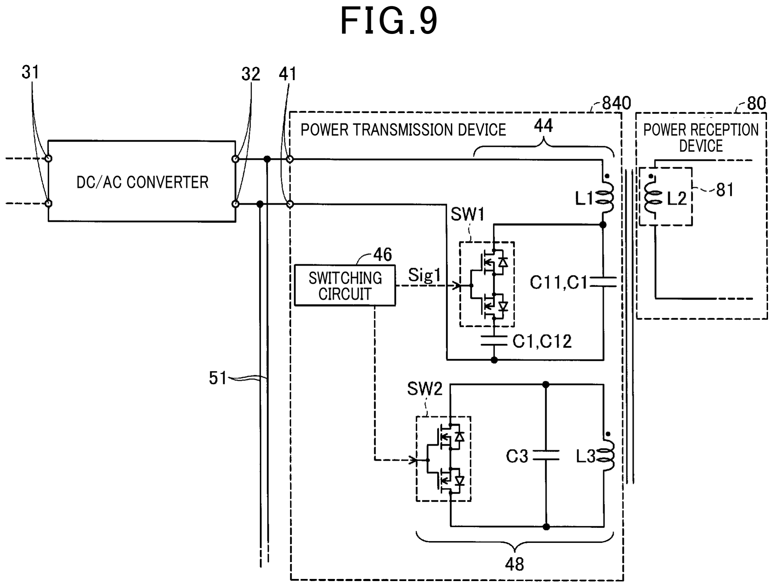

A wireless power transfer system 10 illustrated in Fig. 1 includes a directcurrent (DC) power supply unit 20, multiple DC/AC (Alternating-Current) converters 30, multiple power transmission devices 40, DC wirings 51, and AC wirings 52. The power transmission devices 40 according to the first embodiment are buried under a road. Each power transmission device 40 is configured to wirelessly transmit power to a power reception device 80(see Fig. 9) installed in a vehicle serving as a mobile object, which is traveling on the road. The phrase "the vehicle is traveling" may include both a first state in which the vehicle is moving and a second state in which the vehicle is stopped for, for example, waiting at a traffic light. The vehicle may be, for example, configured as an electric vehicle or a hybrid vehicle.

The mobile object to which the power reception device 80 is mounted is not limited to a vehicle traveling on a road. For example, as the mobile object, an AGV (Automated Guided Vehicle) or a traveling robot may be used. Each power transmission device 40 may be installed not only under a road but also on a sidewalk, in a parking lot adjacent to the road, or along a route on which an AGV travels. Each power transmission device 40 may be mounted not only on a road or a path substantially parallel to the ground, but also on a side surface substantially perpendicular to the ground. In addition, a device to which the power reception device 80 is mounted may be a stationary apparatus rather than a mobile object.

The DC power supply unit 20 includes power input terminals 21 and power output terminals 22. The DC/AC converter 30 includes input terminals 31 and output terminals 32. Each power transmission device 40 includes power transmission terminals 41. Each DC wiring, i.e., each DC wiring member, 51, which is comprised of paired wires (51, 51), transmits DC power output from the DC power supply unit 20. Each AC wiring, i.e., each AC wiring member, 52, which is comprised of paired wires (52, 52), transmits AC power output from a corresponding one of the multiple DC/AC converters 30.

The power input terminals 21 of the DC power supply unit 20 are connected to output terminals of a grid power supply (GPS) via a corresponding one of power lines. The DC power supply unit 20 receives AC power from the grid power supply GPS through the two power lines, converts the AC power into DC power, and outputs the converted DC power from the power output terminals 22. The output power of the grid power supply GPS has, for example, a frequency of 60 Hz and a voltage of 200 V. The output voltage of the DC power supply unit 20 is, for example, 400 V. However, these voltage and frequency values are not limited to the above examples.

Each of the DC/AC converters 30 is connected in parallel to the DC power supply unit 20. Specifically, the power output terminals 22 of the DC power supply unit 20 are connected to the input terminals 31 of the closest DC/AC converter 30 through a corresponding one of the DC wirings 51, i.e., through respective paired wires of a corresponding one of the DC wirings 51.

The input terminals 31 of each pair of adjacent DC/AC converters 30 are connected to one another via a corresponding one of the DC wirings 51, i.e., via respective paired wires of a corresponding one of the DC wirings 51. . This enables the DC power output from the same DC power supply unit 20 to be supplied to each DC/AC converter 30 connected to the corresponding one of the DC wirings 51.

Each DC/AC converter 30 converts the DC power supplied from the DC power supply unit 20 via the corresponding one of the DC wirings 51 into AC power at an operating frequency, and outputs the converted AC power from the output terminals 32. The output voltage of the AC power is, for example, 200 V, but is not limited thereto.

The multiple power transmission devices 40 are provided for each DC/AC power converter 30. The multiple power transmission devices 40 provided for each DC/AC power converter 30 are connected in parallel to the corresponding DC/AC converter 30.

One of the multiple power transmission devices 40 provided for each DC/AC power converter 30 is disposed closest to the corresponding DC/AC converter 30. The transmission terminals 41 of the closest power transmission device 40 of the multiple power transmission devices 40 provided for each DC/AC power converter 30 are connected to the output terminals 32 of the corresponding DC/AC converter 30 via the corresponding one of the AC wirings 52, i.e., via respective paired wires of the corresponding one of the AC wirings 52.

The transmission terminals 41 of one of the adjacent power transmission devices 40 of each pair provided for each DC/AC power converter 30 are connected to the transmission terminals 41 of the other thereof via the corresponding one of the AC wirings 52, i.e., via respective paired wires of the corresponding one of the AC wirings 52. This enables the multiple power transmission devices 40 connected to each DC/AC converter 30 to receive the AC power output from the same DC/AC converter 30 through the corresponding one of the AC wirings 52.

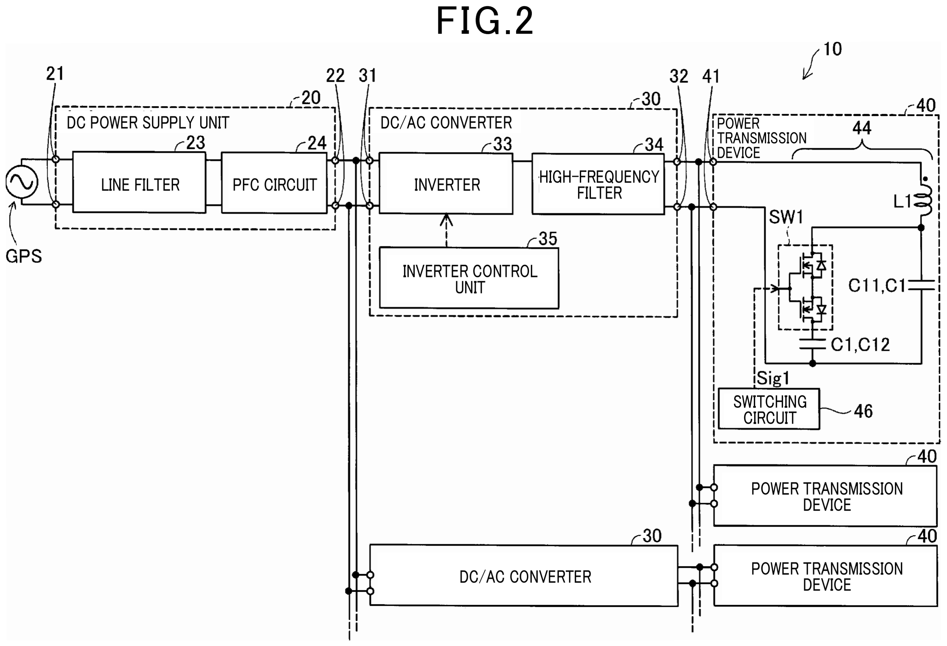

Each of the multiple power transmission devices 40 connected to each DC/AC converter 30 includes a power transmission coil L1 (see Fig. 2), and applies the AC power supplied from the corresponding DC/AC converter 30 through the corresponding one of the AC wirings 52, 52 to the power transmission coil L1 to accordingly performs wireless power transfer to the power reception device 80.

### Circuit configuration of wireless power transfer system

As shown in Fig. 2, the DC power supply unit 20 further includes a line filter 23 and a power factor correction (PFC) circuit 24. The line filter 23 removes noise from the AC power supplied from the grid power supply GPS. The PFC circuit 24 converts the AC power passed through the line filter 23 into DC power and outputs the DC power. The PFC circuit 24 is configured to bring the power factor closer to unity, and specifically includes, for example, a rectifier and a smoothing capacitor. The DC power generated by the PFC circuit 24 is output from the power output terminals 22.

The DC/AC converter 30 further includes an inverter 33, a high-frequency filter 34, and an inverter control unit 35. The inverter 33 converts the DC power supplied from the DC power supply unit 20 into AC power at a high operating frequency. In the first embodiment, the operating frequency is set to 85 kHz. The inverter control unit 35 drives the inverter 33. The high-frequency filter 34 connected downstream the inverter 33 removes high-frequency noise from the AC power output by the inverter 33, and the filtered AC power is then output from the output terminals 32.

Each power transmission device 40 further includes a transmission resonance circuit 44 and a switching circuit 46. The transmission resonance circuit 44 includes the transmission coil L1, transmission capacitors C1, and a first switch SW1. The transmission capacitors C1 enable the transmission resonance circuit 44 to be in resonance or non-resonance at the operating frequency. The transmission capacitors C1 include a first transmission capacitor C11 and a second transmission capacitor C12.

The first transmission capacitor C11 is connected in series to the transmission coil L1. The second transmission capacitor C12 is connected in series to the first switch SW1 as a series-connection member. The series-connection member is connected in parallel to the first transmission capacitor C11. The first switch SW1 is a bidirectional switch comprised of two FETs (Field Effect Transistors) and configures such that the source terminals of the two FETs are connected together. A switching signal Sig1 output from the switching circuit 46 is applied to the gate terminals of the two FETs, thereby controlling the ON/OFF state of the first switch SW1.

When the switching signal Sig1 having a high level is input to the first switch SW1, the first switch SW1 is tuned on, i.e., is in a conductive state, allowing a current to flow through the second transmission capacitor C12. The ON state of the first switch SW1 enables the transmission resonance circuit 44 to become resonant due to the combination of the first transmission capacitor C11, the second transmission capacitor C12, and the transmission coil L1.

In contrast, when the switching signal Sig1 having a low level is input to the first switch SW1, the first switch SW1 is turned off, i.e., is in a non-conductive state, so that the resonance frequency of the circuit formed by the first transmission capacitor C11 and the transmission coil L1 deviates from the operating frequency, rendering the transmission resonance circuit 44 to become non-resonant.

As shown in Fig. 9, the power reception device 80 includes at least a power receiving resonance circuit 81 having a power reception coil L2. Note that the power reception device 80 is omitted in Fig. 2.

When detecting the presence of the power reception coil L2 (see Fig. 9) near the transmission coil L1, the switching circuit 46 switches the first switch SW1 from the OFF state to the ON state using the switching signal Sig1 sent to the first switch SW1. This causes the transmission resonance circuit 44 to be in a resonant state. When the transmission coil L1 and the power reception coil L2 are magnetically coupled, the resonance frequency of the transmission resonance circuit 44 is set substantially equal to that of the power receiving resonance circuit 81, thereby enabling wireless power transfer to the power reception coil L2 through magnetic coupling between the coils L1 and L2.

The rated power of the DC power supply unit 20 is greater than that of the DC/AC converter 30. This therefore enables, as shown in Fig. 1, the single DC power supply unit 20 to supply the DC power to the multiple DC/AC converters 30. When an additional DC/AC converter 30 is installed, the input terminals 31, 31 of the additional DC/AC converter 30 are connected via a DC wiring 51 to the input terminals of the closest existing DC/AC converter 30. Because the DC power supply unit 20 has a higher rated power, one or more additional DC/AC converters 30 can be connected to the same DC power supply unit 20.

Similarly, the rated power of each DC/AC converter 30 is set to a value sufficient to supply power to the corresponding multiple power transmission devices 40 connected thereto. This therefore enables an additional power transmission device 40 to be connected to each DC/AC converter 30.

When a new DC/AC converter 30 is added, connecting the new DC/AC converter 30 to the DC/AC converter 30 disposed adjacent thereto via a DC wiring 51 enables the new DC/AC converter 30 to receive power from the DC power supply unit 20. This configuration reduces installation work of the new DC/AC converter 30 as compared with a case where the new DC/AC converter 30 is directly connected to the DC power supply unit 20. Similarly, connecting a new power transmission device 40 to any power transmission device 40 disposed closest to the new power transmission device 40 via a AC wiring 52 makes it possible to reduce installation work of the new power transmission device 40.

The wireless power transfer apparatus 10 is configured such that the multiple DC/AC converters 30, each of which is connected to the multiple power transmission devices 40, are installed to be connected to the single DC power supply unit 20. This configuration enables the difference in power transfer efficiency among all the power transmission devices 40 to be minimized.

If all power transmission devices 40 were supplied with AC power from a single DC/AC converter 30, the total length of the AC wirings 52 connecting between the single DC/AC converter 30 and each power transmission device 40 would increase, leading to greater parasitic inductance and capacitance.

Because the wiring length between the DC/AC converter 30 and a power transmission device 40 located closer to the DC/AC converter 30 differs from that between the DC/AC converter 30 and a power transmission device 40 located farther from the DC/AC converter 30, the impedance along the current path between the closer power transmission device 40 and the DC/AC converter 30 would differ from that between the further power transmission device 40 and the DC/AC converter 30. This therefore would result in a variation in the current flowing through each transmission coil L1, leading to reduction in power transfer efficiency among the power transmission devices 40.

In contrast, the wireless power transfer apparatus 10 is configured such that the DC power output from the DC power supply unit 20 is distributed into DC power components for the respective multiple DC/AC converters 30. Each DC power component is supplied to the corresponding one of the multiple DC/AC converters 30, so that AC power obtained from each DC/AC converter 30 is supplied to the corresponding multiple power transmission devices 40.

This configuration of the wireless power transfer apparatus 10, which shares the wiring arrangement region between the DC power supply unit 20 and the power transmission devices 40 into (i) a first region in which the DC wirings 51 are disposed and (ii) a second region in which the AC wirings 52 are disposed, enables the total length of the AC wirings 52 extending from each DC/AC converter 30 to the corresponding multiple power transmission devices 40 to be kept short. This therefore makes it possible to reduce variations in power transfer characteristics among the multiple power transmission devices 40.

To compensate for impedance differences among the current paths due to extended AC wiring, a configuration may be considered in which compensating capacitor units are installed between the single DC/AC converter 30 and the respective power transmission devices 40. However, this would require additional components of the compensating capacitors, increasing system complexity.

In contrast, the wireless power transfer apparatus 10 of the first embodiment, which shares the wiring arrangement region between the DC power supply unit 20 and the power transmission devices 40 into (i) the first region in which the DC wirings 51 are disposed and (ii) the second region in which the AC wirings 52 are disposed, enables the length of the AC wirings 52 from each DC/AC converter 30 to the corresponding multiple power transmission devices 40 to be kept short. This therefore makes it possible to reduce both the installation cost of the AC wirings 52 and AC losses.

As described above, the wireless power transfer apparatus 10 of the first embodiment includes the DC power supply unit 20 and the DC/AC converters 30.

The rated power of the DC power supply unit 20 is greater than that of each DC/AC converter 30, allowing additional DC/AC converters 30 and/or power transmission devices 40 to be easily added.

The wireless power transfer apparatus 10 of the first embodiment is configured to share the wiring arrangement region between the DC power supply unit 20 and the power transmission devices 40 into (i) the first region in which the DC wirings 51 are disposed and (ii) the second region in which the AC wirings 52 are disposed. This configuration therefore enables the length of the AC wirings 52 from each DC/AC converter 30 to the corresponding multiple power transmission devices 40 to be kept shorter than in a comparative configuration in which all power transmission devices 40 are connected to the single DC/AC converter 30 through AC wirings 52. Consequently, even if the wireless power transfer apparatus 10 includes the power transmission devices 40, the wireless power transfer apparatus 10 makes it possible to minimize the differences in distance between each DC/AC converter 30 and the corresponding multiple power transmission devices 40, thus reducing variations in power transfer efficiency among the power transmission devices 40.

### Second embodiment

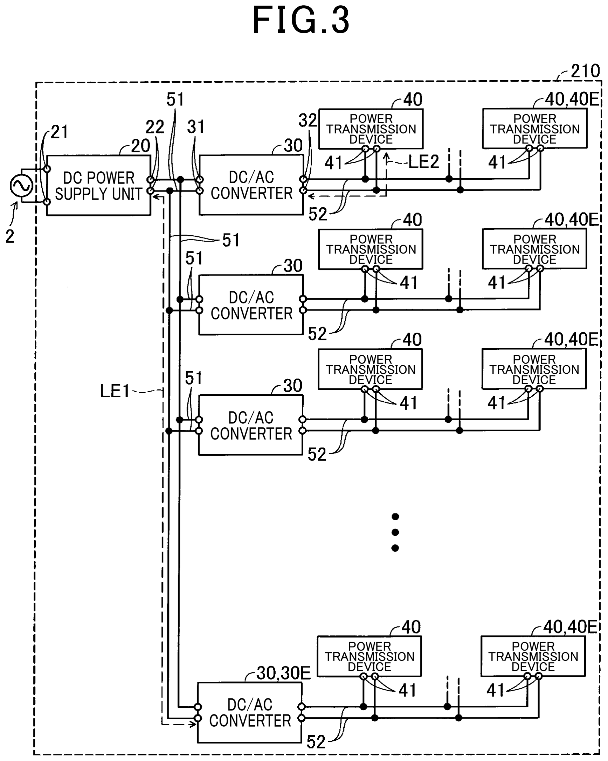

As illustrated in Fig. 3, a wireless power transfer apparatus 210 according to the second embodiment differs from the wireless transfer apparatus 10 according to the first embodiment in that a connection configuration between the multiple DC/AC converters 30 and the power transmission devices 40.

Components of the wireless power transfer apparatus 210, which are substantially identical or equivalent to corresponding components of the wireless transfer apparatus 10, are assigned the same reference characters of the corresponding components of the wireless transfer apparatus 10, and therefore detailed description of the components of the wireless power transfer apparatus 210 are omitted.

One of the multiple DC/AC converters 30, which is located farthest from the DC power supply unit 20, is hereinafter referred to as a farthest DC/AC converter 30E. The farthest DC/AC converter 30E is connected to the DC power supply unit 20 via a main DC wiring 51. The other DC/AC converters 30 except for the farthest DC/AC converter 30E are connected to the DC power supply unit 20 via branch DC wirings 51 branching from the main DC wiring 51 that connects between the farthest DC/AC converter 30E and the DC power supply unit 20.

Specifically, the main DC wiring 51 has connectors at respective branch points for the other DC/AC converters 30, and the branch DC wiring 51 of each of the other DC/AC converters 30 is connected to the corresponding one of the connectors of the main DC wiring 51. The farthest DC/AC converter 30E is located to have the longest length in all the DC/AC converters 30.

Similarly, one of the power transmission devices 40 provided for each DC/AV converter 30, which is located farthest from the corresponding DC/AC converter 30, is hereinafter referred to as a farthest power transmission device 40E. The farthest power transmission device 40E of the multiple DC/AC converters 30 provided for each DC/AV converter 30 is connected to the corresponding DC/AV converter 30 via a main AC wiring 52. The other power transmission devices 40 provided for each DC/AV converter 30 except for the farthest power transmission device 40E are connected to the corresponding DC/AC converter 30 via branch AC wirings 52 branching from the main AC wiring 52 that connects between the farthest power transmission device 40E and the corresponding DC/AC converter 30.

One of the power transmission devices 40 provided for each DC/AV converter 30, which is located closest to the corresponding DC/AC converter 30, is hereinafter referred to as a closest power transmission device 40.

The DC wiring 51 connecting between the input terminals 31 of the farthest DC/AC converter 30E and the power output terminals 22 of the DC power supply unit 20 has a length LE1, and the AC wiring 52 connecting between the power transmission terminals 41 of the closest power transmission device 40 and the output terminals 32 of the corresponding DC/AC converter 30 have a length LE2. The length LE2 is set to be shorter than the length LE1. The length LE1 of the DC wiring 51 is defined as the length of one of paired wires of the DC wiring 51, which is longer than the other thereof. The length LE2 of the AC wiring 52 is defined as the length of one of the paired wires of the AC wiring 52, which is longer than the other thereof. The closest power transmission device 40 of the multiple power transmission devices 40 provided for each DC/AC converter 30 is located to have the shortest length in all the multiple power transmission devices 40.

The length LE2 set to be shorter than the length LE1 makes it possible to further improve the advantageous benefit of reducing variations in power transfer efficiency among the power transmission devices 40. The length of the AC wiring 52 connecting between the power transmission terminals 41, 41 of the farthest power transmission device 40E and the output terminals 32, 32 of the corresponding DC/AC converter 30 is preferably set to be shorter than the length LE1, making it possible to reduce variations in power transfer efficiency among all the power transmission devices 40.

Actually, the DC/AC converters 30 and the power transmission devices 40 are arranged to satisfy the above magnitude relationship between the length LE1 and the length LE2. That is, there is a wide installation region in which plural sets of the multiple power transmission devices 40 are installed, the sets of the multiple power transmission devices 40 are installed in the respective divided installation regions, and the DC/AC power converters 30 are disposed in the respective divided installation regions so that each DC/AC power converter 30 is connected to the multiple power transmission devices 40 of the corresponding set disposed in the corresponding divided installation region. This enables the above magnitude relationship between the length LE1 and the length LE2 to be satisfied.

The wireless power transfer apparatus 210 of the second embodiment provides the same advantageous benefits as those achieved by the wireless power transfer apparatus 10 of the first embodiment.

Additionally, the wireless power transfer apparatus 210 of the second embodiment, which is configured such that the length LE2 of the AC wiring 52 is set to be shorter than the length LE1 of the DC wiring 51, makes it possible to further improve the advantageous benefit of reducing variations in power transfer efficiency among the power transmission devices 40.

The wireless power transfer apparatus 210 of the second embodiment includes the multiple DC/AC converters 30 and the multiple power transmission devices 40 provided for each DC/AC converter 30.

The multiple DC/AC converters 30 are connected to the DC power supply unit 20 via the DC wirings 51. Each DC/AC converter 30 and the multiple power transmission devices 40 provided for the corresponding DC/AC converter 30 are connected to the AC wirings 52. Specifically, this configuration of the wireless power transfer apparatus 210 shares the wiring arrangement region between the DC power supply unit 20 and each power transmission device 40 into (i) the first region in which the DC wirings 51 are disposed and (ii) the second region in which the AC wirings 52 are disposed. This configuration therefore enables the length of the AC wirings 52 from each DC/AC converter 30 to the corresponding multiple power transmission devices 40 to be kept shorter than in a comparative configuration in which all power transmission devices 40 are connected to the single DC/AC converter 30 through AC wirings 52. Consequently, the wireless power transfer apparatus 210 makes it possible to reduce variations in power transfer efficiency among the power transmission devices 40.

### Third embodiment

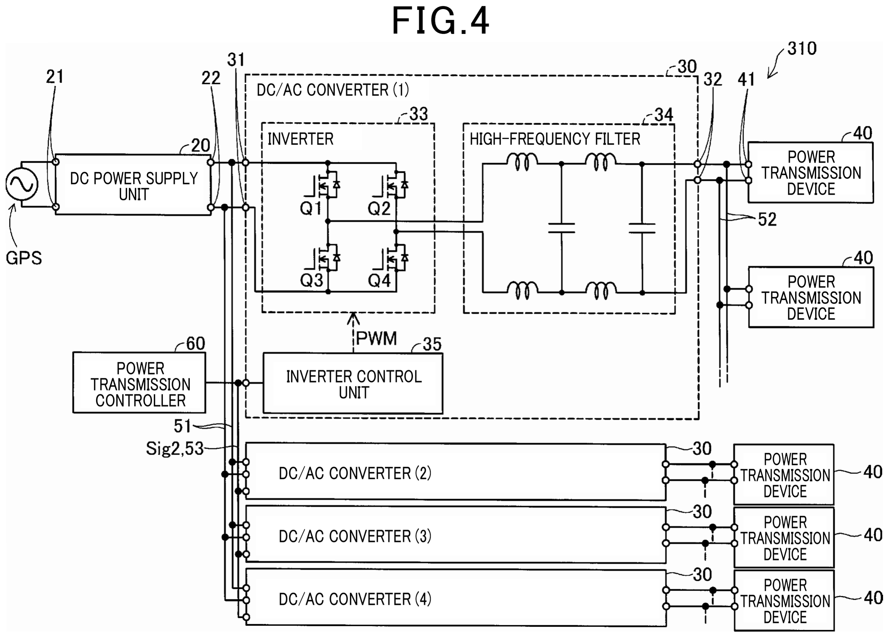

As illustrated in Fig. 4, a wireless power transfer apparatus 310 according to the third embodiment mainly differs from each above embodiment in that the wireless power transfer apparatus 310 includes a power transmission controller 60. Components of the wireless power transfer apparatus 310, which are substantially identical or equivalent to corresponding components of the wireless transfer apparatus of each above embodiment, are assigned the same reference characters of the corresponding components of the wireless transfer apparatus of each above embodiment, and therefore detailed description of the components of the wireless power transfer apparatus 210 are omitted.

The power transmission controller 60 controls the multiple DC/AC converters 30. The power transmission controller 60 transmits a synchronization signal Sig2 to each of the DC/AC converters 30. Specifically, the power transmission controller 60 and each DC/AC converter 30 are connected by a signal line 53 that carries the synchronization signal Sig2.

The inverter 33 includes four switching devices Q1, Q2, Q3, and Q4 that form a bridge circuit. The switching devices Q1-Q4 of the second embodiment are implemented by MOSFETs (metal-oxide-semiconductor field-effect transistors).

As described above, the inverter control unit 35 drives the inverter 33.

The inverter control unit 35 supplies, to the gate terminals of the respective switching devices Q1-Q4, PWM control signals; each PWM control signal to be supplied to the gate terminal of the corresponding switching device Q1-Q4 sets the corresponding switching device Q1-Q4 to the ON state or the OFF state.

Specifically, the inverter control unit 35 sets the pair of switching devices Q1 and Q4 and the pair of switching devices Q2 and Q3 to ON and OFF states complementarily. More specifically, during a period in which the PWM control signal applied to each switching device Q1, Q4 is an ON voltage that turns on the corresponding switching device Q1, Q4, the PWM control signal applied to each switching device Q2, Q3 is set to an OFF voltage that turns off the corresponding switching device Q2, Q3. Similarly, during a period in which the PWM control signal applied to each switching device Q2, Q3 is the ON voltage that turns on the corresponding switching device Q2, Q3, the PWM control signal applied to each switching device Q1, Q4 is set to the OFF voltage that turns off the corresponding switching device Q1, Q4.

The inverter control unit 35 is configured to complementarily drive the pair of switching devices Q1 and Q4 and the pair of switching devices Q2 and Q3 by applying the PWM control signals that alternate between the ON voltage and the OFF voltage within each cycle, such that when switching devices Q1 and Q4 are ON, switching devices Q2 and Q3 are OFF, and vice versa. The inverter control unit 35 is configured to adjust the duty cycle, i.e., the proportion of each cycle during which the ON voltage is applied, to accordingly adjust the output voltage of the DC/AC converter 30.

The high-frequency filter 34 of the third embodiment is a fourth-order filter comprised of inductors and capacitors. However, the high-frequency filter 34 is not limited to a fourth-order filter, and a filter having another circuit configuration may be employed.

The inverter control unit 35 is configured to control, using the received synchronization signal Sig2, the phase of the output power of each DC/AC converter 30. More specifically, the inverter control unit 35 is configured to control the phase of the output voltage of each DC/AC converter 30.

The power transmission controller 60 controls at least two DC/AC converters 30 selected from the multiple DC/AC converters 30 such that the phase of the output power of one of the at least two selected DC/AC converters 30 is different from that of the output power of the other thereof. This prevents an in-phase current from flowing through each of the at least two selected DC/AC converters 30, thus reducing ripple in the output voltage of the upstream DC power supply unit 20. Accordingly, this makes it possible to downsize the smoothing capacitor of the PFC circuit 24 of the DC power supply unit 20. In addition, this makes it possible to reduce the influence on EMC (Electromagnetic Compatibility) due to ripple currents flowing in the DC wirings 51 and AC wirings 52.

The third embodiment is configured to control the phases of the output-voltage waveforms of all the DC/AC converters 30 connected to the DC power supply unit 20 so as to be mutually different from one another.

Device numbers have been assigned to the respective DC/AC converters 30. In the second embodiment, device number "1" has been assigned to the DC/AC converter 30 closest to the DC power supply unit 20, and subsequent device numbers have been assigned to the remaining DC/AC converter 30 in increasing order of distance from the DC power supply unit 20.

When the device number of any converter 30 connected to the DC power supply unit 20 is denoted by "N" (N is an integer 1 or greater) and the total number of DC/AC converters 30 is denoted by "X" (X is an integer 2 or greater), the power transmission controller 60 controls the DC/AC converters 30 such that the waveform of the output power of the N-th DC/AC converter 30 has a phase shifted by (N - 1)π / X [rad] with respect to a predetermined reference waveform.

The value (N - 1)π / X [rad] is also referred to as the phase correction value.

In the second embodiment, the output-voltage waveform of the DC/AC converter 30 having device number "1" is set as the predetermined reference waveform.

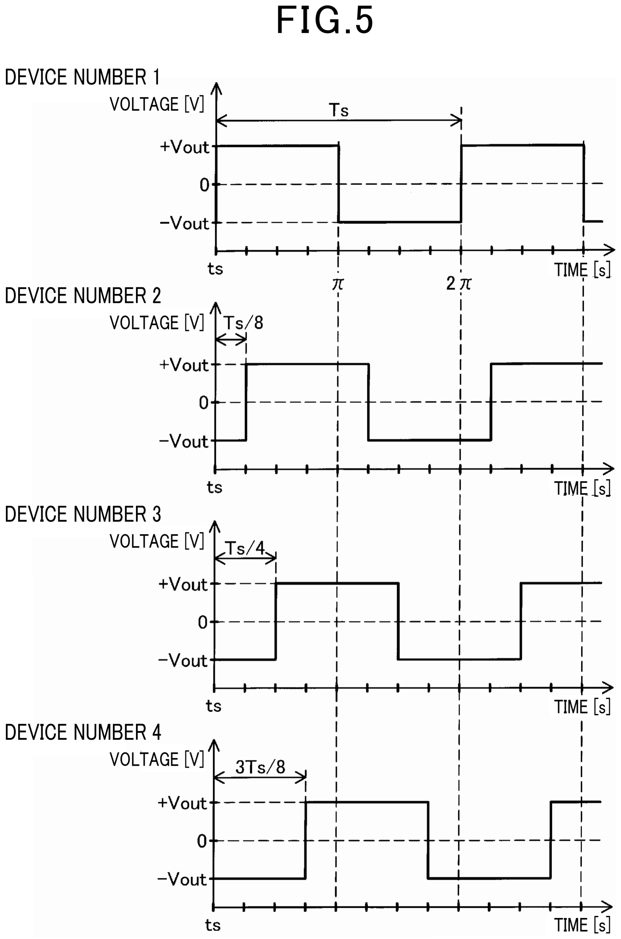

As shown in Fig. 5, the output voltage of the inverter 33 included in the DC/AC converter 30 having device number "1" is a rectangular wave having a phase of 0 rad at time ts and a period of Ts [s]. For the DC/AC converter 30 having device number "2," with N = 2 and X = 4, the output-voltage waveform is shifted by (1π / 4) [rad] from the reference waveform. That is, the output-voltage waveform is a rectangular wave with a phase of 0 [rad] at time (ts + Ts / 8).

Similarly, the output-voltage waveform of the DC/AC converter 30 having device number "3" is shifted by (1π / 2) [rad] relative to the reference waveform, and that of the converter having device number "4" is shifted by (3π / 4) [rad] from the reference waveform.

As described above, the phases of the output currents of all the DC/AC converters 30 are mutually different from one another, thus further reducing ripple in the output voltage of the upstream DC power supply unit 20.

The power transmission controller 60 of the third embodiment, transmits, to each DC/AC converter 30, the device number and the phase correction value of the corresponding DC/AC converter 30. Each DC/AC converter 30 stores the received device number and phase correction value in an unillustrated memory included in the inverter control unit 35. The inverter control unit 35 of each DC/AC converter 30 drives the inverter 33 using the phase correction value and the synchronization signal Sig2.

As a modification of the third embodiment, the device number and phase correction value for each DC/AC converter 30 may be set to the corresponding DC/AC converter 30 by an operator without through communication between the power transmission controller 60 and the corresponding DC/AC converter 30. Alternatively, instead of the phase correction value, a time correction value (N - 1)Ts / (2X) may be set to each DC/AC converter 30. The time correction value for each DC/AC converter 30 denotes a time difference between a reference time at which the phase of the reference waveform is 0 rad and a time at which the phase of the output waveform of the corresponding DC/AC converter 30 is 0 rad.

The third embodiment has described a case where phases of the output-voltage waveforms of all the DC/AC converters 30 connected to the DC power supply unit 20 are controlled to be mutually different from one another. However, the present invention is not limited thereto.

Specifically, the third embodiment may be modified to control the phases of the output-voltage waveforms of at least two of the DC/AC converters 30 connected to the DC power supply unit 20 so as to be mutually different from one another.

Even if there are plural DC/AC converters 30 included in all the DC/AC converters 30 connected to the DC power supply unit 20, which output the samephase output voltage, this modification makes it possible to reduce ripple in the output voltage of the DC power supply unit 20 as compared with a case in which all the DC/AC converters 30 output voltages with the same phase. The third embodiment, which controls the phases of the output-voltage waveforms of all the DC/AC converters 30 connected to the DC power supply unit 20 so as to be mutually different from one another, is preferable, because it further enhances ripple-reduction.

The wireless power transfer apparatus 310 of the third embodiment provides the same advantageous benefits as those achieved by the wireless power transfer apparatus 10 of the first embodiment.

In addition, the power transmission controller 60 of the wireless power transfer apparatus 310 controls the multiple DC/AC converters 30 such that the phases of the output power of at least two of the converters 30 are mutually different from one another, thereby reducing ripple in the output voltage of the DC power supply unit 20. In particular, the power transmission controller 60 controls the multiple DC/AC converters 30 such that the waveform of the output power of the N-th DC/AC converter 30 is shifted by a corresponding phase correction value relative to the reference waveform, thereby further improving the ripple-reduction effect on the output voltage of the DC power supply unit 20.

### Fourth embodiment

The wireless power transfer apparatus 310 of the third embodiment is configured such that the power transmission controller 60 communicates with each DC/AC converter 30 via the corresponding signal lines 53, 53.

In contrast, a wireless power transfer apparatus 410 according to the fourth embodiment is configured such that the power transmission controller 60 communicates with each DC/AC converter 30 wirelessly, which differs from the wireless power transfer apparatus 310 of the third embodiment. The same reference characters are used for components that are common between the third and fourth embodiments, and detailed descriptions of the common components are appropriately omitted.

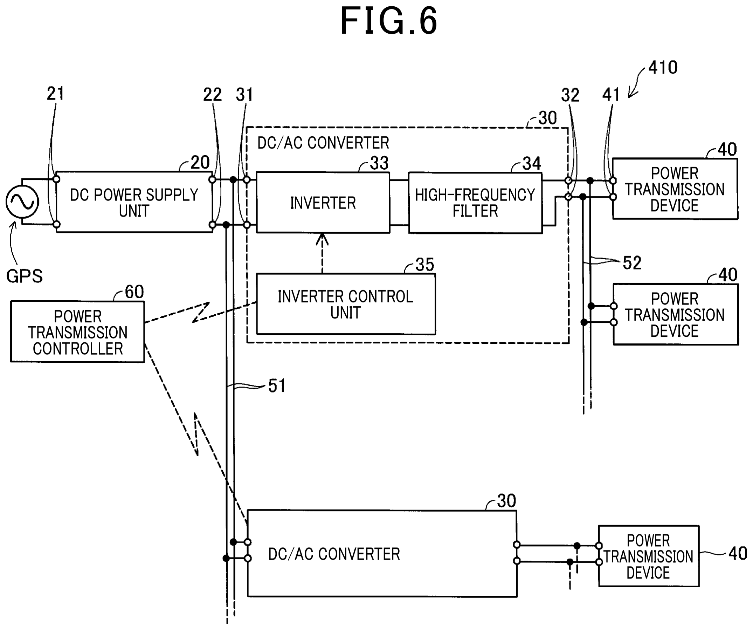

The inverter control unit 35 of each DC/AC converter 30 according to the fourth embodiment includes, as shown in Fig. 6, an unillustrated communication unit. The synchronization signal Sig2 is transmitted by wireless communication between the inverter control unit 35 of each DC/AC converter 30 and the power transmission controller 60.

The wireless power transfer apparatus 410 of the fourth embodiment provides the same advantageous benefits as those achieved by the wireless power transfer apparatus 310 of the third embodiment.

Additionally, the wireless power transfer apparatus 410 of the fourth embodiment makes it possible to eliminate the effort of laying the signal lines 53, 53, thus facilitating installation of the wireless power transfer apparatus 410.

### Fifth embodiment

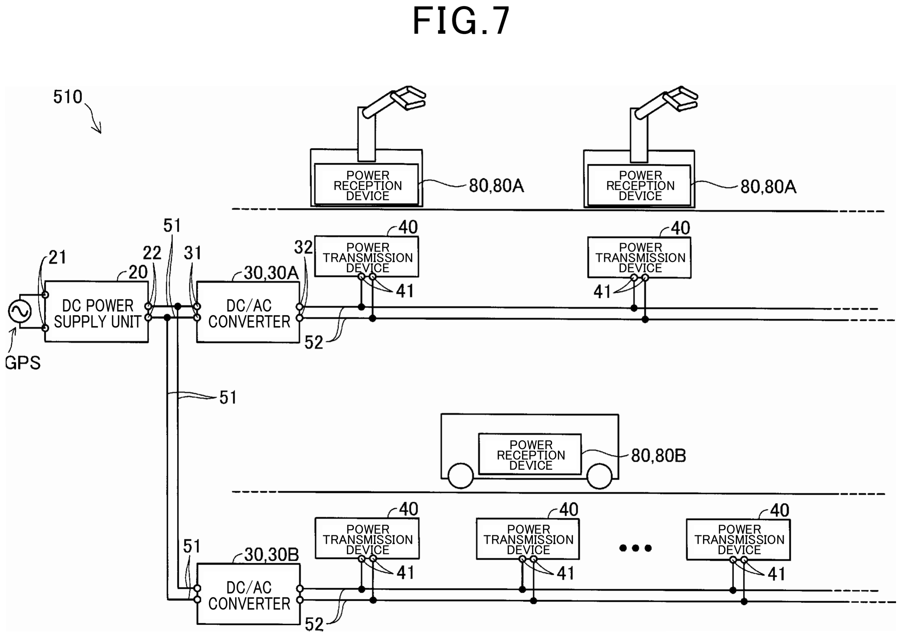

A wireless power transfer apparatus 510 according to this embodiment includes, as illustrated in Fig. 7, two DC/AC converters 30, and the output voltages of the two DC/AC converters 30 are different from each other. This is a main different point of the wireless power transfer apparatus 510 from the wireless power transfer apparatus of each of the foregoing embodiments. The same reference characters are used for components that are common between the fifth embodiment and each of the foregoing embodiments, and detailed descriptions of the common components are appropriately omitted.

One of the two DC/AC converters 30 is referred to as a first DC/AC converter 30A, and the other as a second DC/AC converter 30B.

The first DC/AC converter 30A and the second DC/AC converter 30B are installed in different sections. Each of the two DC/AC converters 30 corresponds to a respective one of first and second types of power reception devices 80 having mutually different levels of required power.

At least one power reception device included in the first type of power reception devices 80 are referred to as at least one first power reception device 80A, and at least one power reception device included in the second type of power reception devices 80 are referred to as at least one second power reception devices 80B.

The power transmission devices 40 include a first type of at least one power transmission device 40 and a second type of at least one power transmission device 40. The at least one power transmission device 40 of the first type performs wireless power transfer to the at least one first power reception devices 80A, which is also referred to as at least one first power transmission device 40. The at least one power transmission device 40 of the second type performs wireless power transfer to the at least one second power reception device 80B, which is also referred to as at least one second power transmission device 40.

The level of the required power of the at least one first power reception device 80A and that of the at least one second power reception device 80B are different from one another. Specifically, the maximum required power of the at least one first power reception device 80A is greater than that of the at least one second power reception device 80B.

The first DC/AC converter 30A supplies AC power to the at least one first power transmission devices 40 that performs wireless power transfer to the at least one first power reception device 80A, and the second DC/AC converter 30B supplies AC power to the at least one second power transmission device 40 that performs wireless power transfer to the at least one second power reception device 80B.

The at least one first power reception device 80A is mounted to at least one industrial robot fixed at an installation site. The at least one first power transmission device 40 has a fixed relative position to the at least one first power reception device 80A, so that the at least one first power reception device 80A is able to continuously receive wirelessly transferred power from the at least one first power transmission device 40.

In contrast, the at least one second power reception device 80B is mounted on a movable AGV. The relative position between the at least one second power reception device 80B and the at least one second power transmission device 40 varies, so that the at least one second power reception device 80B is able to receive wirelessly transferred power from the at least one second power transmission device 40 only when the at least one second power reception device 80B lies within the reach of the wirelessly transferred power from the at least one second power transmission device 40.

Consequently, the at least one first power reception device 80A receives power on average and thus has a smaller instantaneous value of the required power, whereas the at least one second power reception device 80B does not receive power on average and thus has a larger instantaneous value of the required power. The voltage value at the maximum required power of the at least one second power reception device 80B is greater than that at the maximum required power of the at least one first power reception device 80A.

The output voltage of the at least one second DC/AC converter 30B is higher than that of the at least one first DC/AC converter 30A. Accordingly, each of the at least one first DC/AC converter 30A and the at least one second DC/AC converter 30B is capable of supplying, through at least one power transmission device 40 connected thereto, power that satisfies the required power of the corresponding one of the at least one first power reception device 80A and the at least one second power reception device 80B.

Specifically, adjustment of the duty cycle of the PWM control signal of each of the at least one first DC/AC converter 30A and the at least one second DC/AC converter 30B enables adjustment of the output voltage of the corresponding one of the at least one first DC/AC converter 30A and the at least one second DC/AC converter 30B. That is, the maximum duty cycle of the PWM control signal for the at least one first DC/AC converter 30A is set to be smaller than that of the PWM control signal for the at least one second DC/AC converter 30B.

The wireless power transfer apparatus 510 of the fifth embodiment provides the same advantageous benefits as those achieved by the wireless power transfer apparatus of each of the aforementioned embodiments.

Additionally, the wireless power transfer apparatus 510 of the fifth embodiment includes the at least one first DC/AC converter 30A and the at least one second DC/AC converter 30B. The maximum duty cycle of the PWM control signal for the at least one first DC/AC converter 30A is set to be smaller than that for the at least one second DC/AC converter 30B. This makes it possible to wirelessly supply, to each of the power reception devices 80 having mutually different level of the required power, power that satisfies the level of the required power of the corresponding one of the power reception devices 80.

### Sixth embodiment

The wireless power transfer apparatus 510 of the fifth embodiment is configured such that adjustment of the duty cycle of the PW control signal output from the inverter control unit 35 of each DC/AC converter 30, 30A, 30B adjusts the output voltage of the corresponding DC/AC converter 30, 30A, 30B.

In contrast, a wireless power transfer apparatus 610 of the sixth embodiment is configured such that adjustment of the impedance of the high-frequency filter 34 of each DC/AC converter 30, 30A, 30B adjusts the output voltage of the corresponding DC/AC converter 30, 30A, 30B.

This is a main different point of the wireless power transfer apparatus 610 from the wireless power transfer apparatus of the fifth embodiment. The same reference characters are used for components that are common between the sixth embodiment and each of the foregoing embodiments, and detailed descriptions of the common components are appropriately omitted.

Specifically, because the circuit configuration of each DC/AC converter 30 is substantially the same as that according to the third embodiment shown in Fig. 4, the following description uses the reference characters illustrated in Fig. 4. The configuration of the wireless power transfer apparatus 510 is substantially the same as that according to the fifth embodiment illustrated in Fig. 7, and therefore the following description uses the reference characters illustrated in Fig. 7.

Like the fifth embodiment, the wireless power transfer apparatus 510 includes
(I) The at least one first DC/AC converter 30A connected to the at least one first power transmission device 40 that performs wireless power transfer to the at least one first power reception device 80A
(II) The at least one second DC/AC converter 30B connected to the at least one second power transmission device 40 that performs wireless power transfer to the at least one second power reception device 80B

The voltage value at the maximum required power of the at least one second power reception device 80B is greater than that of the at least one first power reception device 80A.

The impedance of the high-frequency filter 34 of the at least one first DC/AC converter 30A and that of the at least one second DC/AC converter 30B are different from each other according to the sixth embodiment.

Specifically, the impedance of the high-frequency filter 34 of the at least one first DC/AC converter 30A is set such that the fundamental component of the output voltage of the at least one first DC/AC converter 30A becomes smaller than the fundamental component of the output voltage of the at least one second DC/AC converter 30B. This enables the output voltage of the at least one second DC/AC converter 30B to be higher than that of the at least one first DC/AC converter 30A.

The sixth embodiment described above achieves the same advantageous benefits as those achieved by the wireless power transfer apparatus of the fifth embodiment.

### Seventh embodiment

The wireless power transfer apparatus 510 of the fifth embodiment is configured such that adjustment of the duty cycle of the PW control signal output from the inverter control unit 35 of each DC/AC converter 30, 30A, 30B adjusts the output voltage of the corresponding DC/AC converter 30, 30A, 30B.

In contrast, a wireless power transfer apparatus 710 of the seventh embodiment is configured such that adjustment of a turns ratio of a transformer 36 included in each DC/AC converter 730 adjusts the output voltage of the corresponding DC/AC converter 730.

This is a main different point of the wireless power transfer apparatus 710 from the wireless power transfer apparatus of the fifth embodiment. The same reference characters are used for components that are common between the seventh embodiment and each of the foregoing embodiments, and detailed descriptions of the common components are appropriately omitted.

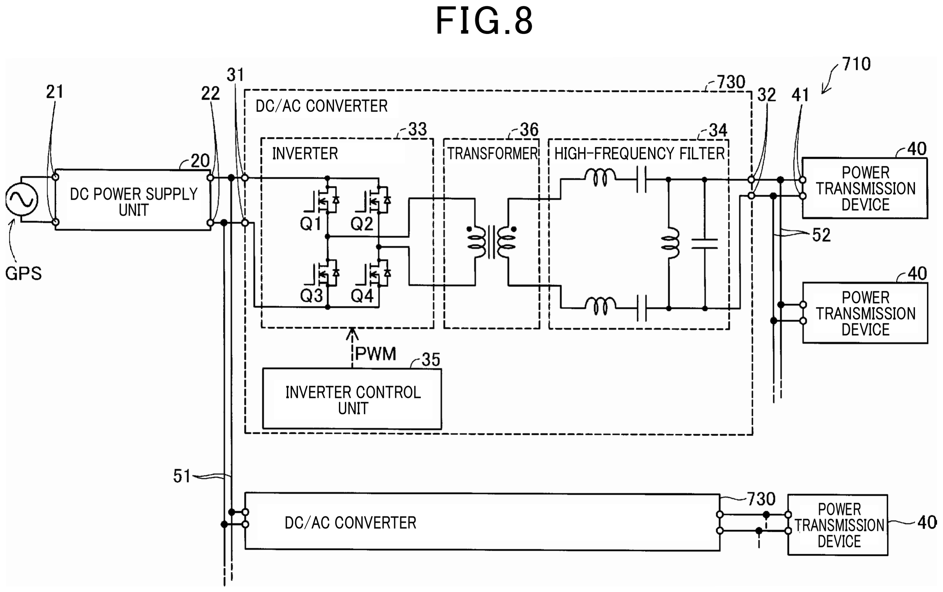

As shown in Fig. 8, each DC/AC converter 730 includes the transformer 36. The transformer 36 is disposed between the inverter 33 and the high-frequency filter 34, and steps down or steps up the output voltage of the inverter 33. The output power of the transformer 36 is input to the high-frequency filter 34. The high-frequency filter 34 of the seventh embodiment is comprised of first and second power lines, a first set of a coil and a capacitor connected in series on the first power line, a second set of a coil and a capacitor connected in series on the second power line, a line-to-line coil connected between the first and second power lines, and a line-to-line capacitor connected between the first and second power lines.

Like the fifth embodiment, the wireless power transfer apparatus 710 includes
(I) The at least one first DC/AC converter 30A connected to the at least one first power transmission device 40 that performs wireless power transfer to the at least one first power reception device 80A
(II) The at least one second DC/AC converter 30B connected to the at least one second power transmission device 40 that performs wireless power transfer to the at least one second power reception device 80B

The voltage value at the maximum required power of the at least one second power reception device 80B is greater than that of the at least one first power reception device 80A.

The turns ratio of the transformer 36 of the at least one first DC/AC converter 30A and the turns ratio of the transformer of the at least one second DC/AC converter 30B are set to be different from one another according to the seventh embodiment. Specifically, the turns ratio of the transformer 36 of the at least one first DC/AC converter 30A is set to be greater than the turns ratio of the transformer of the at least one second DC/AC converter 30B. This enables the output voltage of the at least one second DC/AC converter 30B to be higher than the output voltage of the at least one first DC/AC converter 30A.

The seventh embodiment described above achieves the same advantageous benefits as those achieved by the wireless power transfer apparatus of the fifth embodiment.

### Eighth embodiment

Each power transmission device 40 of the first embodiment includes the transmission resonance circuit 44, and is configured to perform wireless power transfer using the transmission coil L1 included in the transmission resonance circuit 44.

In contrast, a wires power transfer apparatus of the eighth embodiment includes power transmission devices 840 illustrated in Fig. 9, the circuit configuration of each power transmission device 840 differs from that of the power transmission device 40. This is a main different point of the wireless power transfer apparatus of the eighth embodiment from the wireless power transfer apparatus of the first embodiment. The same reference characters are used for components that are common between the eighth embodiment and each of the foregoing embodiments, and detailed descriptions of the common components are appropriately omitted.

Each power transmission device 840 includes, in addition to the above configuration of the power transmission device 40, a tertiary resonant circuit 48.

The tertiary resonant circuit 48 aims to provide or interrupt a power transfer path between the corresponding power transmission device 80 and the power reception device 80. The tertiary resonant circuit 48 includes a tertiary coil L3, a tertiary capacitor C3, and a second switch SW2. The tertiary capacitor C3 and the second switch SW2 are connected in parallel to the tertiary coil L3. The second switch SW2 is a bidirectional switch similar to the first switch SW1. The tertiary coil L3 is disposed at a position where it can be magnetically coupled with the transmission coil L1.

Thus, when the transmission coil L1 and the power reception coil L2 are magnetically coupled with one another, the transmission coil L1, the power reception coil L2, and the tertiary coil L3 are magnetically coupled with one another.

The capacitance value of the tertiary capacitor C3 is set such that, when the transmission coil L1, the power reception coil L2, and the tertiary coil L3 are magnetically coupled with one another, a parallel resonant circuit formed by the tertiary coil L3 and the tertiary capacitor C3 is in the resonant state.

Like the first embodiment, the power reception device 80 is mounted to a movable object. When the power reception coil L2 approaches the transmission coil L1 of a power transmission device 840, the switching circuit 46 switches each of the transmission resonance circuit 44 and the tertiary resonant circuit 48 from the non-resonant state to the resonant state, thus switching the power transmission device 840 from a standby state to a power-supply state. Specifically, as described above, the switching circuit 46 switches the first switch SW1 from the OFF state to the ON state and switches the second switch SW2 from the ON state to the OFF state. When the second switch SW2 is switched to the OFF state, the parallel resonant circuit formed by the tertiary coil L3 and the tertiary capacitor C3 is set to the resonant state. This results in a power-supply current flows through the transmission coil L1 and wireless power is supplied from the transmission coil L1 to the power reception coil L2.

In contrast, when the power reception coil L2 moves away from the transmission coil L1 of the power transmission device 840, the switching circuit 46 switches each of the transmission resonance circuit 44 and the tertiary resonant circuit 48 from the resonant state to the non-resonant state, thus switching the power transmission device 840 from the power-supply state to the standby state. Specifically, as described above, the switching circuit 46 switches the first switch SW1 from the ON state to the OFF state and switches the second switch SW2 from the OFF state to the ON state. When the second switch SW2 is switched to the ON state, the terminals across the tertiary coil L3 are shortcircuited, so that the tertiary resonant circuit 48 becomes non-resonant.

This results in the power transmission device 40 being set to the standby state in which a standby current smaller than the power-supply current flows through the transmission coil L1.

The transmission coils L1 of the power transmission devices 840 are arranged in an array, and the power reception coil L2 is supplied with power from the nearest one of the arranged transmission coils L1. That is, the multiple transmission coils L1 of the power transmission devices 840 arranged in an array are sequentially switched from the standby state to the power-supply state according to their placement order. Therefore, magnetic flux generated by the transmission coil L1 of a power transmission device 840 set to the power-supply state may pass through the transmission coil L1 of an adjacent power transmission device 840 set to the standby state. From this viewpoint, the tertiary resonant circuit 48 of the adjacent power transmission device 840 set to the standby state is set to the non-resonant state, making it possible to reduce magnetic flux induced in the transmission coil L1 of the adjacent power transmission device 840.

The eighth embodiment described above achieves the same advantageous benefits as those achieved by the wireless power transfer apparatus of the fifth embodiment.

### Ninth embodiment

Each power transmission device 940 according to the ninth embodiment has a circuit configuration different from that of the power transmission device 840 of the eighth embodiment. The same reference characters are used for components that are common between the ninth embodiment and each of the foregoing embodiments, and detailed descriptions of the common components are appropriately omitted.

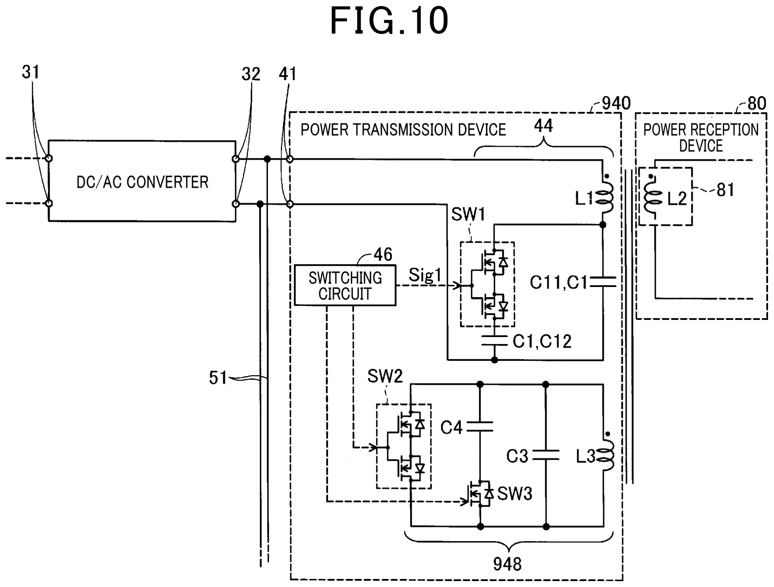

As shown in Fig. 10, each power transmission device 940 includes a tertiary resonant circuit 948. In addition to the tertiary coil L3, the tertiary capacitor C3, and the second switch SW2, the tertiary resonant circuit 948 further includes a fourth capacitor C4 and a third switch SW3. The fourth capacitor C4 is connected in series to the third switch SW3 as a series-connection member. The series-connection member of the fourth capacitor C4 and the third switch SW3 is connected in parallel to the tertiary coil L3. The third switch SW3 is comprised of a single FET.

The third switch SW3 is set to the ON state when the tertiary resonant circuit 948 is to be set to the resonant state, and is set to the OFF state when the tertiary resonant circuit 948 is to be set to the non-resonant state. The combined capacitance of the tertiary capacitor C3 and the fourth capacitor C4 is set such that, when the transmission coil L1, the power reception coil L2, and the tertiary coil L3 are magnetically coupled to one another, a parallel resonant circuit formed by the tertiary coil L3, the tertiary capacitor C3, and the fourth capacitor C4 is in the resonant state.

When the power transmission device 840 is to be set to the standby state, the switching circuit 46 sets the first switch SW1 to the OFF state, the second switch SW2 to the ON state, and the third switch SW3 to the OFF state. In contrast, when the power transmission device 840 is to be set to the power-supply state, the switching circuit 46 sets the first switch SW1 to the ON state, the second switch SW2 to the OFF state, and the third switch SW3 to the ON state.

Compared with the tertiary resonant circuit 48 of the eighth embodiment, the tertiary resonant circuit 948 of the ninth embodiment additionally includes the third switch SW3 and the fourth capacitor C4. Therefore, the resonant or non-resonant state of the tertiary resonant circuit 948 can be set not only by the ON/OFF state of the second switch SW2 but also by the ON/OFF state of the third switch SW3. Thus, for example, even if a failure occurs in which the second switch SW2 remains constantly OFF, controlling the third switch SW3 enables the tertiary resonant circuit 948 to be set to the non-resonant state.

The ninth embodiment described above achieves the same advantageous benefits as those achieved by the wireless power transfer apparatus of the fifth embodiment.

### Modifications

The transmission capacitor C1 of the transmission resonance circuit 44 according to the first embodiment described above is connected in series to the transmission coil L1. The circuit configuration of the transmission resonance circuit 44 and that of the power receiving resonance circuit 81 are not particularly limited thereto.

For example, the transmission capacitor C1 of the transmission resonance circuit 44 may be connected in series to the transmission coil L1, and a power receiving capacitor of the power receiving resonance circuit 81 may be connected in series to the power reception coil L2. That is, the transmission resonance circuit 44 and the power receiving resonance circuit 81 provide a so-called S-S configuration.

The transmission capacitor C1 of the transmission resonance circuit 44 may be connected in parallel to the transmission coil L1 and a power reception capacitor of the power receiving resonance circuit 81 may be connected in series to the power reception coil L2. That is, the transmission resonance circuit 44 and the power receiving resonance circuit 81 provide a so-called P-S configuration.

In addition to the transmission capacitor C1 connected in series to the transmission coil L1, a capacitor connected in parallel to the transmission coil L1 may be provided, and a first power receiving capacitor connected in series to the power reception coil L2 and a second power receiving capacitor connected in parallel to the power reception coil L2 may be provided in the power receiving resonance circuit 81. That is, the transmission resonance circuit 44 and the power receiving resonance circuit 81 provide a so-called SP-PS configuration.

The transmission resonance circuit 44 may include a closed circuit in which a coil and a capacitor are connected in series. The coil of the closed circuit is disposed at a position where it can be magnetically coupled with the power reception coil L2 when the transmission coil L1 and the power reception coil L2 are magnetically coupled. The capacitor of the closed circuit may be connected in parallel instead of in series to the coil.

The transmission resonance circuit 44 may include a coil connected in series to the transmission coil L1 and a capacitor connected in parallel to the coil. This coil is disposed at a position where it can be magnetically coupled with the power reception coil L2 when the transmission coil L1 and the power reception coil L2 are magnetically coupled.

In the third embodiment described above, the power transmission controller 60 controls the multiple DC/AC converters 30 such that the phases of the output power of at least two of the DC/AC converters 30 are mutually different from one another. As a modification, the power transmission controller 60 may control the multiple DC/AC converters 30 such that the phases of the output power of the respective DC/AC converters 30 are the same.

In the first embodiment described above, each of the switching devices Q1-Q4 constituting the pulse generation circuit 82 is comprised of a MOSFET. As a modification, each of the switching devices Q1-Q4 may be comprised of another semiconductor device, for example, an IGBT (Insulated Gate Bipolar Transistor) that has a free-wheel diode connected thereto. The same applies to each of the first switch SW1, the second switch SW2, and the third switch SW3.

The first switch SW1 and the second switch SW2 are not limited to bidirectional switches and may be unidirectional switches comprised of a single switching device. The third switch SW3 may be a bidirectional switch.

Each DC/AC converter 30 is connected to its adjacent DC/AC converter 30 by a corresponding one of the DC wirings 51 according to the first embodiment. The other DC/AC converters 30 except for the farthest DC/AC converter 30E are connected to the DC power supply unit 20 via the branch DC wirings 51 branching from the main DC wiring 51 that connects between the farthest DC/AC converter 30E and the DC power supply unit 20.

As another configuration for connecting the DC power supply unit 20 and each DC/AC converter 30, the DC power supply unit 20 and each DC/AC converter 30 may be connected via a distributor such as a terminal block. Alternatively, the multiple DC/AC converters 30 may be connected to the power output terminals 22, 22 of the DC power supply unit 20.

Similarly, as another configuration for connecting the multiple power transmission devices 40 provided for each DC/AC power converter 30 to the corresponding DC/AC converter 30, the DC/AC converter 30 and each of the multiple power transmission devices 40 may be connected via a distributor such as a terminal block. Alternatively, the multiple power transmission devices 40 may be connected to the output terminals 32, 32 of the corresponding DC/AC converter 30.

The present disclosure is not limited to the above embodiments, and can be implemented by various configurations within the scope of the present disclosure. For example, technical features included in the embodiments, which correspond to technical features included in the exemplary aspects described in the SUMMARY of the present disclosure, can be freely combined with each other or can be freely replaced with another feature in order to solve a part or all of the above issue and/or achieve a part or all of the above advantageous benefits. One or more of the technical features included in the above exemplary embodiments, which are not described as essential elements in the specification, can be omitted as necessity arises.

The following describes features of the present disclosure.

### [First feature]

A wireless power transfer apparatus (10, 210 to 710) for wireless power transfer to at least one power reception device (80) according to a first feature includes a DC power supply unit (20), at least one DC wiring (51) through which output power of the DC power supply unit is transferred, at least one DC/AC converter (30, 730) connected to the at least one DC wiring, at least one AC wiring (52) through which output power of the at least one DC/AC converter is transferred, and at least one power transmission device (40, 840, 940) connected to the at least one AC wiring. Each of the DC power supply unit and the at least one DC/AC converter has a rated power. The rated power of the DC power supply is greater than the rated power of the at least one DC/AC converter.

### [Second feature]

In the wireless power transfer apparatus according to a second feature, which depends from the first feature, the at least one DC/AC converter includes multiple DC/AC converters, the at least one power transmission device includes multiple power transmission devices, the at least one AC wiring includes AC wirings, and the DC power supply unit has one or more power output terminals (22) connected to the at least one DC wiring. Each of the multiple DC/AC converters has one or more input terminals (31) connected to the at least one DC wiring, and one or more output terminals (32) connected to a corresponding one of the AC wirings. Each of the multiple power transmission devices has one or more power transmission terminals (41) connected to a corresponding one of the AC wirings. One of the multiple power transmission devices located closest to a selected one of the DC/AC converters connected to the one of the multiple power transmission devices is defined as a closest power transmission device. One of the DC/AC converters located farthest from the DC power supply unit is defined as a farthest DC/AC converter. A length of a selected one of the AC wirings connecting between (i) the one or more power transmission terminals of the closest power transmission device and (ii) the one or more output terminals of the selected one of the DC/AC converters is shorter than a length of the at least one DC wiring connecting between (i) the one or more input terminals of the farthest DC/AC converter and (ii) the one or more power output terminals of the DC power supply unit.

### [Third feature]

In the wireless power transfer apparatus according to a third feature, which depends from the first feature or the second feature, the at least one DC/AC converter includes multiple DC/AC converters, and the wireless power transfer apparatus further comprising a power-transmission controller configured to control the multiple DC/AC converters, and transmit, to each of the multiple DC/AC converters, a synchronization signal. Each of the multiple DC/AC converters includes an inverter (33) for outputting the output power, and an inverter control unit (35) configured to control the inverter. The inverter control unit is configured to receive the synchronization signal and control a phase of the output power based on the synchronization signal. The power-transmission controller is configured to control the multiple DC/AC converters such that the phase of the output power of one of selected at least two DC/AC converters included in the multiple DC/AC converters differs from the phase of the output power of the other of the selected at least two DC/AC converters.

### [Fourth feature]

In the wireless power transfer apparatus according to a fourth feature, which depends from the third feature, the multiple DC/AC converters have respective device numbers assigned thereto in increasing order of distance from the DC power supply unit, the device number of any converter included in the multiple DC/AC converters is denoted by N (N is an integer 1 or greater), and a total number of the multiple DC/AC converters is denoted by X (X is an integer 2 or greater). The power-transmission controller is configured to control the multiple DC/AC converters such that a waveform of the output power of the N-th DC/AC converter has a phase shifted by (N - 1)π / X [rad] with respect to a predetermined reference waveform.

### [Fifth feature]

In the wireless power transfer apparatus according to a fifth feature, which depends from any one of the first to fourth features, the at least one power reception device includes a first power reception device and a second power reception device, the at least one DC/AC converter includes multiple DC/AC converters, and the at least one power transmission device includes a first power transmission device and a second power transmission device. The multiple DC/AC converters include a first DC/AC converter connected to the first power transmission device for wireless power transfer to the first power reception device, and a second DC/AC converter connected to the second power transmission device for wireless power transfer to the second power reception device. Each of the multiple DC/AC converters includes an inverter (33) for outputting the output power, and an inverter control unit (35) configured to apply, to the inverter, a PWM control signal to control the inverter. A maximum duty cycle of the PWM control signal for the first DC/AC converter is set to be smaller than a maximum duty cycle of the PWM control signal for the second DC/AC converter.

### [Sixth feature]

In the wireless power transfer apparatus according to a sixth feature, which depends from any one of the first to fifth features, the at least one power reception device includes a first power reception device and a second power reception device, the at least one DC/AC converter includes multiple DC/AC converters, and the at least one power transmission device includes a first power transmission device and a second power transmission device. The multiple DC/AC converters include a first DC/AC converter connected to the first power transmission device for wireless power transfer to the first power reception device, and a second DC/AC converter connected to the second power transmission device for wireless power transfer to the second power reception device. Each of the multiple DC/AC converters includes an inverter (33) for outputting the output power, and a filter (34) connected downstream of the inverter. An impedance of the filter of the first DC/AC converter is set such that a fundamental component of an output voltage of the first DC/AC converter becomes smaller than a fundamental component of an output voltage of the second DC/AC converter.

### [Seventh feature]

In the wireless power transfer apparatus according to a seventh feature, which depends from any one of the first to sixth features, the at least one power reception device includes a first power reception device and a second power reception device, the at least one DC/AC converter includes multiple DC/AC converters, and the at least one power transmission device includes a first power transmission device and a second power transmission device. The multiple DC/AC converters include a first DC/AC converter connected to the first power transmission device for wireless power transfer to the first power reception device, and a second DC/AC converter connected to the second power transmission device for wireless power transfer to the second power reception device. Each of the multiple DC/AC converters includes an inverter (33) for outputting the output power, and a transformer (36) connected downstream of the inverter. A turns ratio of the transformer of the first DC/AC converter is set to be greater than a turns ratio of the transformer of the second DC/AC converter.

### [Eighth feature]

In the wireless power transfer apparatus according to an eighth feature, which depends from any one of the first to seventh features, the DC power supply unit includes a PFC circuit connected to a grid power supply (GPS) and configured to convert first AC power supplied from the grid power supply into DC power. The at least one DC/AC converter includes an inverter (33) configured to convert the DC power output from the PFC circuit into second AC power. The at least one power transmission device includes a transmission resonance circuit that includes a transmission coil (L1) and a power transmission capacitor (C1), and a switching circuit (46) configured to switch the transmission resonance circuit between a resonant state and a non-resonant state. The at least one DC/AC converter includes multiple DC/AC converters, and the at least one power transmission device includes multiple power transmission devices.

## Claims

1. A wireless power transfer apparatus (10, 210 to 710) for wireless power transfer to at least one power reception device (80), the wireless power transfer apparatus comprising:
a DC power supply unit (20);
at least one DC wiring (51) through which output power of the DC power supply unit is transferred;
at least one DC/AC converter (30, 730) connected to the at least one DC wiring;
at least one AC wiring (52) through which output power of the at least one DC/AC converter is transferred; and
at least one power transmission device (40, 840, 940) connected to the at least one AC wiring,
each of the DC power supply unit and the at least one DC/AC converter having a rated power, the rated power of the DC power supply being greater than the rated power of the at least one DC/AC converter.

2. The wireless power transfer apparatus according to claim 1, wherein:
the at least one DC/AC converter comprises multiple DC/AC converters;
the at least one power transmission device comprises multiple power transmission devices;
the at least one AC wiring comprises AC wirings;
the DC power supply unit has one or more power output terminals (22) connected to the at least one DC wiring;
each of the multiple DC/AC converters has:
one or more input terminals (31) connected to the at least one DC wiring; and
one or more output terminals (32) connected to a corresponding one of the AC wirings;
each of the multiple power transmission devices has one or more power transmission terminals (41) connected to a corresponding one of the AC wirings;
one of the multiple power transmission devices located closest to a selected one of the DC/AC converters connected to the one of the multiple power transmission devices is defined as a closest power transmission device;
one of the DC/AC converters located farthest from the DC power supply unit is defined as a farthest DC/AC converter; and
a length of a selected one of the AC wirings connecting between (i) the one or more power transmission terminals of the closest power transmission device and (ii) the one or more output terminals of the selected one of the DC/AC converters is shorter than a length of the at least one DC wiring connecting between (i) the one or more input terminals of the farthest DC/AC converter and (ii) the one or more power output terminals of the DC power supply unit.

3. The wireless power transfer apparatus according to claim 1, wherein:
the at least one DC/AC converter comprises multiple DC/AC converters,
the wireless power transfer apparatus further comprising a power-transmission controller configured to control the multiple DC/AC converters, and transmit, to each of the multiple DC/AC converters, a synchronization signal;
each of the multiple DC/AC converters comprises:
an inverter (33) for outputting the output power; and
an inverter control unit (35) configured to control the inverter;
the inverter control unit is configured to receive the synchronization signal and control a phase of the output power based on the synchronization signal; and
the power-transmission controller is configured to control the multiple DC/AC converters such that the phase of the output power of one of selected at least two DC/AC converters included in the multiple DC/AC converters differs from the phase of the output power of the other of the selected at least two DC/AC converters.

4. The wireless power transfer apparatus according to claim 3, wherein:
the multiple DC/AC converters have respective device numbers assigned thereto in increasing order of distance from the DC power supply unit;
the device number of any converter included in the multiple DC/AC converters is denoted by N (N is an integer 1 or greater);
a total number of the multiple DC/AC converters is denoted by X (X is an integer 2 or greater); and
the power-transmission controller is configured to:
control the multiple DC/AC converters such that a waveform of the output power of the N-th DC/AC converter has a phase shifted by (N - 1)π / X [rad] with respect to a predetermined reference waveform.

5. The wireless power transfer apparatus according to claim 1, wherein:
the at least one power reception device comprises a first power reception device and a second power reception device;
the at least one DC/AC converter comprises multiple DC/AC converters;
the at least one power transmission device comprises a first power transmission device and a second power transmission device;
the multiple DC/AC converters include:
a first DC/AC converter connected to the first power transmission device for wireless power transfer to the first power reception device; and
a second DC/AC converter connected to the second power transmission device for wireless power transfer to the second power reception device;
each of the multiple DC/AC converters comprises:
an inverter (33) for outputting the output power; and
an inverter control unit (35) configured to apply, to the inverter, a PWM control signal to control the inverter; and
a maximum duty cycle of the PWM control signal for the first DC/AC converter is set to be smaller than a maximum duty cycle of the PWM control signal for the second DC/AC converter.

6. The wireless power transfer apparatus according to claim 1, wherein:
the at least one power reception device comprises a first power reception device and a second power reception device;
the at least one DC/AC converter comprises multiple DC/AC converters;
the at least one power transmission device comprises a first power transmission device and a second power transmission device;
the multiple DC/AC converters include:
a first DC/AC converter connected to the first power transmission device for wireless power transfer to the first power reception device; and
a second DC/AC converter connected to the second power transmission device for wireless power transfer to the second power reception device;
each of the multiple DC/AC converters comprises:
an inverter (33) for outputting the output power; and
a filter (34) connected downstream of the inverter; and
an impedance of the filter of the first DC/AC converter is set such that a fundamental component of an output voltage of the first DC/AC converter becomes smaller than a fundamental component of an output voltage of the second DC/AC converter.

7. The wireless power transfer apparatus according to claim 1, wherein:
the at least one power reception device comprises a first power reception device and a second power reception device;
the at least one DC/AC converter comprises multiple DC/AC converters;
the at least one power transmission device comprises a first power transmission device and a second power transmission device;
the multiple DC/AC converters include:
a first DC/AC converter connected to the first power transmission device for wireless power transfer to the first power reception device;
a second DC/AC converter connected to the second power transmission device for wireless power transfer to the second power reception device;
each of the multiple DC/AC converters comprises:
an inverter (33) for outputting the output power; and
a transformer (36) connected downstream of the inverter; and
a turns ratio of the transformer of the first DC/AC converter is set to be greater than a turns ratio of the transformer of the second DC/AC converter.

8. The wireless power transfer apparatus according to claim 1, wherein:
the DC power supply unit comprises a PFC circuit connected to a grid power supply (GPS) and configured to convert first AC power supplied from the grid power supply into DC power;
the at least one DC/AC converter comprises an inverter (33) configured to convert the DC power output from the PFC circuit into second AC power;
the at least one power transmission device comprises:
a transmission resonance circuit that includes a transmission coil (L1) and a power transmission capacitor (C1); and
a switching circuit (46) configured to switch the transmission resonance circuit between a resonant state and a non-resonant state;
the at least one DC/AC converter comprises multiple DC/AC converters; and
the at least one power transmission device comprises multiple power transmission devices.
